# EUROPEAN PATENT SPECIFICATION

(11) **EP 2 667 656 B1**
(45) Date of publication and mention of the grant of the patent: **07.08.2019**
(21) Application number: 12168667.9
(22) Date of filing: 21.05.2012
(51) Int. Cl.: H04W 28/06, H04W 92/04, H04W 76/12

(54) **Method and system for transmitting data packets between at least one transmitting and one receiving gateway of a communications network**
Verfahren und System zum Senden von Datenpaketen zwischen mindestens einem sendenden und einem empfangenden Gateway eines Kommunikationsnetzwerks
Procédé et système pour transmettre des paquets de données entre au moins une passerelle de réception et de transmission d'un réseau de communications

(43) Date of publication of application: 27.11.2013
(73) Proprietor: Vodafone GmbH, 40549 Düsseldorf (DE)
(72) Inventor: Pudney, Christopher David, Newbury, RG20 9EZ (GB); Moughton, John, Oxford, OX3 7TR (GB); Verholen, Manfred, 47608 Geldern (DE); Nestler, Lars, 58456 Witten (DE); Elbasyouny, Tarek, 40547 Düsseldorf (DE)
(74) Representative: Müller & Schubert

(56) References cited:
- EP-A1- 1 998 512
- EP-A1- 2 053 794
- WO-A1-2010/107357
- US-A1- 2008 219 262

## Description

The present invention relates to a method and system for transmitting data packets over an interface between at least one transmitting gateway and at least one receiving gateway of a communications network.

Currently mobile operators mainly use circuit switched networks for transporting voice traffic. Over the next years, however, mobile network operators are going to start to gradually migrate their traditional circuit switched voice traffic to IP Multimedia Subsystem (IMS) based Voice over LTE (VoLTE). In this Long Term Evolution (LTE) architecture, Evolved Packet Core as defined in 3GPP TS 23.401 will be used, as underlying network, to carry the migrated voice traffic. Since the size of the end user voice packets are relatively small, compared to the encapsulating protocols headers size, a considerable percentage of the total bandwidth is consumed by these 'overhead' bytes. The problem becomes more relevant on bandwidth limited links through the access backhaul network.

For decreasing the size of data packets, multiplexing of multiple data packets is known. For example 3GPP TS 29.414 defines multiplexing of several voice calls into a single IP packet. This multiplexing is done for the interface between Media Gateways, which is also referred to as the Nb interface. Thereby the bandwidth consumed at that interface can be optimized. For reducing the size of the multiplexed data packet, a multiplex header is introduced, which carries all relevant information for transmission of the data packet. One drawback of this mechanism is that some information required for the transmission is not available within the data packet and thus has to be introduced into fields or octets of the multiplex header. This requires additional processing at the transmitting gateway and increases the size of the multiplexed packet.

Document EP 2 053 794 A1 discloses a multiplexed communication system in which a transmission processing apparatus selects user packets to be multiplexed, stores the user packets in the payload of a multiplexed packet based on the position order of multiplex flags corresponding to destination users and transmits the multiplexed packet. Document US 2008/0219262 A1 relates to generic UDP multiplexing for Voice over Internet Protocol. A plurality of packets for voice data may be received from a plurality of end points. A plurality of packets is multiplexed into a multiplexed packet. Each of the packets in the multiplexed packet includes a transport packet header.

The problem to be solved by the present invention is thus to provide a solution to allow for easy, efficient and reliable transmission of data packets also via a narrow band connection.

The invention is based on the finding that this problem can be solved by utilizing information already available within a data packet for transmission including multiplexing.

The invention is defined by independent claims 1 and 11. In the following, parts of the description and drawings referring to embodiments which are not covered by the claims are not presented as embodiments of the invention, but as examples useful for understanding the invention.

According to a first aspect, the present invention relates to a method for transmitting data packets over an interface between at least one transmitting gateway and at least one receiving gateway of a communications network as specified in claim 1.

Data packets according to the present invention comprise at least one payload and at least one header. The payload of the data packets is preferably small, in particular compared to the size of the header. In a most preferred embodiment the data packets contain voice data as payload. The data packets may, however, also be data such as messages, for example text messages or chat messages. The data packets are hereinafter also referred to as GTP-U PDU or GTP-PDU and the payload of the data packet may also be referred to as the T-PDU or PDU. Therein GTP stands for GPRS Tunnelling Protocol and PDU stands for Packet Data Unit. The data packets may comprise inner headers and outer headers, wherein the inner headers are preferably headers defined in 3GPP TS 29.281 and the outer headers comprise encapsulation headers frames and Ethernet frames.

The gateways between which the transmission will be carried out according to the present invention are a gateway which is comprised by an access point to a core network and comprises radio resource management functionalities, on one side, and a gateway which is comprised by a serving gateway of the core network, on the other side. The core network is a packet oriented mobile data network. The access network is preferably a 3GPP network of a Long term evolution (LTE) architecture. The overall architecture may comprise E-UTRAN (Evolved UTRAN) on the access side, that means as access network, and EPC (Evolved Packet Core) on the core side, that means as core network. The access point is preferably an evolved NodeB (eNB). This base station manages radio resource and mobility in the cell of the communications network to optimize all the user equipment (UE) communication in the radio network structure. Therefore, the LTE eNB is provided with radio resource management capabilities or functionalities. These functionalities may be implemented by a respective algorithm. The eNB interfaces with the UE and hosts the PHYsical (PHY), Medium Access Control (MAC), Radio Link Control (RLC), and Packet Data Control Protocol (PDCP) layers. It also hosts Radio Resource Control (RRC) functionality corresponding to the control plane. As the present invention relates to transmission from the access network, in particular from the eNB, to the core network, it thus differs from data processing on 3GPP Radio-interfaces.

The serving gateway (SGW) is preferably the gateway communicating with the Packet Data Network Gateway (PGW or PDN-GW) of the core network (EPC). The SGW routes and forwards user data packets, while also acting as the fixed point for the user plane during handovers between eNBs and as the fixed point for mobility between LTE and other 3GPP technologies.

According to the present invention the interface between the two gateways is an interface for user plane tunnelling. In particular, the interface is an S1-U interface of a LTE network. In E-UTRAN, eNBs provide the E-UTRAN user plane protocols (PDCP/RLC/MAC/PHY) and control plane (RRC) protocol which terminates towards the UE. The eNBs are connected by the S1 interface to the EPC (Evolved Packet Core). The eNB connects to the MME (Mobility Management Entity) by means of the S1-MME interface and to the Serving Gateway (S-GW) by means of the S1-U interface. The S1-U interface as defined in 3GPP TS 23.401 is the reference point between E-UTRAN and Serving Gateway for the per bearer user plane tunnelling and inter eNB path switching during handover.

According to the present invention, the gateways between which the data packets are to be transferred are comprised by either the access point, in particular the eNB or the serving gateway. In this context, comprised means that the gateway may be integrated into the respective network component or may be provided as a separate entity, that means as a stand alone unit, which is collocated and/or connected to the respective network component. The gateway may collocate in particular a security gateway. Therefore the gateway according to the present invention may also be a security gateway which is collocated to a serving gateway. If reference is made to the access point or the serving gateway hereinafter, this reference is therefore to be understood as reference to the respective security gateway, if provided.

According to the present invention, information is extracted from at least one header of at least one of the data packets received at the transmitting gateway. Extracting according to the present invention is preferably reading of the information without removal of the information from the data packet. The data packet is normally supposed to be delivered from one user equipment such as a mobile terminal to another user equipment. During the delivery of the data packet, the data packet passes different network component. The data packet received at the transmitting gateway of the present invention may, in the case of the access point, be received from a different access point or from a user equipment. In the case of the serving gateway as the transmitting gateway, the data packet may be received from a different component of the core network such as a PDN-GW. Such received data packets include a header. The header includes supplemental data, which is hereinafter referred to as information. The information may for example relate to the sender's and to the recipient's addresses, such as IP addresses, and to the size and to the protocol governing the format of the payload or body, which follows the header. The information may be contained in different header sections such as UDP, GTP-U, IP. The information may be contained in the inner or outer header of the data packet. Preferably, the information is extracted from the header of each data packet received at the transmitting gateway.

According to the present invention, the extracted information is used for transmission of the at least one data packet. By using the extracted information as input information or for selecting data packets for transmission, the method of the present invention can be carried out in an efficient and fast manner. In particular, information such as address information and information on the data payload may be used for the transmission. Thereby data packets and/or transmission paths may be selected taking into account each of the data packets which are to be transmitted.

The transmission according to the present invention includes multiplexing of at least two data packets including at least part of the headers of the received data packets. This means that at least part of the header of the received data packet is maintained in the data packet obtained by multiplexing. The data packet obtained by multiplexing will hereinafter also be referred to as a multiplexed data packet. By maintaining at least part of the header, information may readily be made available at the receiving gateway and can easily be associated to the respective payload.

The information which is extracted from the header of the received data packet may be used as input information for the actual forwarding of the data packet or as input information for the multiplexing of several data packets.

With the present invention, especially by using information contained in the received data packet and maintaining at least part of the header in the multiplexed data packet, efficient multiplexing can be ensured and information may be readily available at the receiving gateway. As the interface via which the multiplexed data packet is to be delivered is off the core network, most preferably a security gateway, the latency and buffering that may be necessary may be provided. The serving gateway itself may be designed for low latency and most likely will not be equipped for buffering other than for paging scenarios, for example when the Serving Gateway has no downstream communication information, such as the GTP TEID for an incoming downlink T-PDU. Preferably the GTP-U PDU multiplexing and also de-multiplexing will therefore preferably be performed close to (or within) the serving gateway on one side of the interface, and in the eNB on the other side. If the GTP-U PDU multiplexing and also de-multiplexing is performed close to the severing gateway, it may preferably be performed within a security gateway. Especially, at the S1-U interface of a LTE network, the benefits that may be achieved can be utilized most efficiently. In particular voice calls may be transported over the Evolved Packet Core (EPC) S1-U interface. The S1-U interface typically involves microwave links of relatively limited bandwidth (often less than 300 Mb/s) and the efficiency improvement achievable with the present invention can therefore avoid clogging of the communication channels and will ensure high quality.

According to one embodiment, the extracted information is used as filter information to select data packets which are to be multiplexed together in one multiplexed packet. As this information will be delivered within the header of the received data packet, the processing necessary for the multiplexing can be minimized. In particular, information relating to the payload itself or to the addressing information contained in the header of the received data packet will be used. By using this information as a criterion on which data packets are to be multiplexed, the efficiency can be further improved.

The extracted information is or is additionally used as addressing information of the designated communication tunnel. In this case, the extracted information will preferably be a Tunnel Endpoint Identifier (TEID) as defined in 3GPP TS 29.281, identifying one specific communication tunnel. As this information is necessary for delivery of the data packet but is already included in the header of the received data packets, there is no need to add addition octets to the header of the multiplexed packet. This header will hereinafter be referred to as a MUX header. The multiplexing process and in particular also the de-multiplexing process is thus simplified even further since there is no additional mapping required at the receiving gateway to assign each data packet contained in the multiplexed data packet to its final user equipment destination.

According to a preferred embodiment, the extracted information is tunnelling information received at the transmitting gateway from the receiving gateway. In operation, the TEID will be assigned at the receiving gateway and will be transmitted to the transmitting gateway, where the TEID may be included into the header of the respective data packet.

According to one embodiment, the selection of packets to be multiplexed is performed based on filter information indicative of the data type to be transmitted in the data packet. By considering the data type of the data to be transmitted, that means of the payload, it will be possible to use the interface for transmission of different kinds of data, such as voice and text data. As the type of data will, however, be considered for the multiplexing process, it will be possible to only multiplex data packets carrying one type of data into one multiplexed packet. Thereby key QoS parameters such as delay and jitter in transmission can be ensured. At the S1-U interface, the information on the data type is already included in the header of received data packets, in particular in the IP section of the header. This information will therefore be available at the point of multiplexing and the decision or selection can thus be based on the information extracted from the received data packets.

According to a further embodiment, the selection of packets to be multiplexed is performed based on filter information indicative of the length of the data packet. By considering the length of the individual data packets, it will be possible to limit the resulting packet size after multiplexing to a given value. The maximum size may in particular be set to be such that fragmentation of the multiplexed data packet can be avoided. Therefore, the maximum size may for example be set to the maximum MTU size for data link layer and may be 1500bytes for the Ethernet link layer.

According to one embodiment, information on the transmitting gateway is included in a multiplex header. Information on the transmitting gateway in this respect means information about the transmitting gateway. This information is preferably extracted from the header of the received data packet. In particular, the information may be extracted from the GTP-U header section of the header. The information on the transmitting gateway may be included in a header generated at the transmitting gateway for the individual data packet or may be included in the MUX header. Alternatively, the information may remain in the header as received at the transmitting gateway. In any case, this information will be included in the multiplexed data packet and may thus be available at the receiving gateway for further processing. In particular, the information on the transmitting gateway may be a source UDP port number which may be used for Error Indication messages to point the sending entity to the particular port number from which the erroneous message was received.

Therefore according to one embodiment, additional information is extracted from the header of at least one of the data packets in a multiplexed packet or from the MUX header at the receiving gateway for error detection.

According to the GTP-U specification, the sending entity, according to the present invention, preferably the eNB for uplink and the Serving-GW for downlink, may select any random number as source UDP port number to encapsulate its GTP-U PDUs, and hence different GTP-U PDUs will have different source UDP port numbers, which could be used by the receiving entity in an Error Indication message to point the sending entity to the particular UDP port number from which the erroneous message was received. The UDP source port number is therefore preferably not shared for multiple multiplexed GTP-U PDUs but is included for each one separately. Two possible embodiments of including the UDP port number as additional information into the multiplexed data packet will be described.

According to one embodiment, the full 8 bytes UDP header of each multiplexed GTP-U PDU may be included in the multiplexed data packet. This embodiment has the advantage that de-multiplexing will be simple and straight forward. However, this embodiment will increase the headers overhead.

According to another embodiment, the additional information may be added to each data packet. In particular, a two byte extra header may be added to each multiplexed GTP-U PDU to carry its UDP source port number only. This embodiment is more efficient than the embodiment described before, but requires the de-multiplexer to reconstruct the UDP header for each GTP-U PDU.

In addition or alternatively to these two embodiments, a one byte MUX Type indicator may also be added to the MUX header to allow for future expansion.

One limiting factor to the size of the multiplexed data packet, which may also be referred to as a resulting packet, is the delay introduced by the multiplexing process. In order to avoid additional delay in the network the actual delivery of data packets is preferably set to be delayed not more than 1 ms to 2 ms, which also effectively limits the number of multiplexed packets and makes the multiplexing-jitter low.

Preferably, at least part of the information is extracted from the GTP-U header of the received data packet. The GTP-U header contains information on the tunnel, in particular a TEID as well as a GTP length filed, which indicates the length or size of the data packet or at least the length of the payload. As this information is in general already included in headers of data packets to be transmitted via a LTE network, no alteration of the protocol or the method of transmission is necessary. The information on the length or size of the data packet or payload may be used to determine the number of data packets that may be multiplexed together in one multiplexed data packet. Thereby, a threshold value, such as the MTU may be considered during multiplexing.

The destination IP address, that means the IP address of eNB for downlink packets or of Serving GW for uplink packets, or other indication of the designated gateway may be used for selection of which data packets, that may belong to different user equipments are to be multiplexed together and tunnelled to the same gateway. By only multiplexing data packets addressed to the same gateway together, the multiplexing process is significantly simplified.

According to another embodiment, at least part of the information which is extracted is the DSCP code or the QCI of the received data packet. Preferably, this information is extracted at the gateway which is comprised by the serving gateway. In this case, where the serving gateway or its security gateway is the transmitting gateway, mapping of a QCI value to a unique DSCP code, will allow for distinguishing for example voice packets. Hence, it will be possible to only multiplex voice data packets together also in the downlink direction. For the uplink, that means transmission from the access point to the serving gateway, the access point, in particular the eNB is QCI aware and can thus already distinguish voice data packets.

One advantage of using the DSCP code for determining the nature of the payload and thereby allowing only data packets of the same nature to be multiplexed together, is that this code will provide the necessary information despite the fact that the multiplexing / de-multiplexing is outside of the 3GPP core network. In particular in downlink direction, VoLTE GTP PDUs can be distinguished from other non-VoLTE packets. The DSCP code is present in the IP header ToS field of the data packet. All VoLTE dedicated bearers will have QCI set to 1, which could be mapped by the serving GW to a unique DSCP code (e.g. Expedited forwarding PHB) on the S1-U interface. Only packets marked with this particular DCSP code are then subject to multiplexing towards the e-NB. In uplink direction, that means transmission from the eNB to the serving gateway, the eNB, being QCI aware, is already in the position to distinguish the VoLTE packets subject to multiplexing. De-Multiplexing is a straight forward process in both downlink and uplink.

For confidentiality and integrity protection according to the present invention, IP packets on the S1-U interface may be encapsulated within an IPsec tunnel. The IPsec tunnel preferably terminates on the eNB on one end, and on a Security Gateway, geographically close to serving gateway, on the other end. The IPsec packet will finally be encapsulated into an Ethernet frame before being sent on the physical interface.

According to another aspect, the present invention relates to a system for transmitting and receiving data packets over an interface between at least one transmitting gateway and at least one receiving gateway of a communications network as specified in claim 11.

The multiplexing unit is designed to perform the function of multiplexing as well as the function of selecting data packets to be multiplexed. Preferably, the selection of the data packets to be multiplexed is only based on information extracted from the header of the received data packets. Thereby, the process is simplified.

According to one embodiment, the transmitting and the receiving gateway is integrated into or collocated with an access point to the core network or the gateway is integrated into or collocated with the serving gateway of the core network.

As the communication via the interface between the gateways is bidirectional, the transmitting gateway will act as a receiving gateway in one direction of transmission. In particular, the eNB or a security gateway collocated to it, will act as the transmitting gateway in the uplink direction and as the receiving gateway in the downlink direction. The multiplexing unit of the respective gateway may, in the case of the gateway acting as a receiving gateway, act as the de-multiplexing unit. Alternatively, a separate de-multiplexing unit may be provided at each gateway for de-multiplexing received multiplexed data packets.

Features and advantages which are described with respect to the method of the invention also apply to the inventive system and vice versa.

The invention will now be described again with reference to the enclosed figures, wherein:
Figure 1 shows a schematic depiction of a system according to one embodiment of the invention;
Figure 2 shows a schematic view of multiplexing according to the present invention;
Figure 3 shows an example of a header of a multiplexed data packet according to the present invention; and
Figure 4 shows a table indicating bandwidth savings.

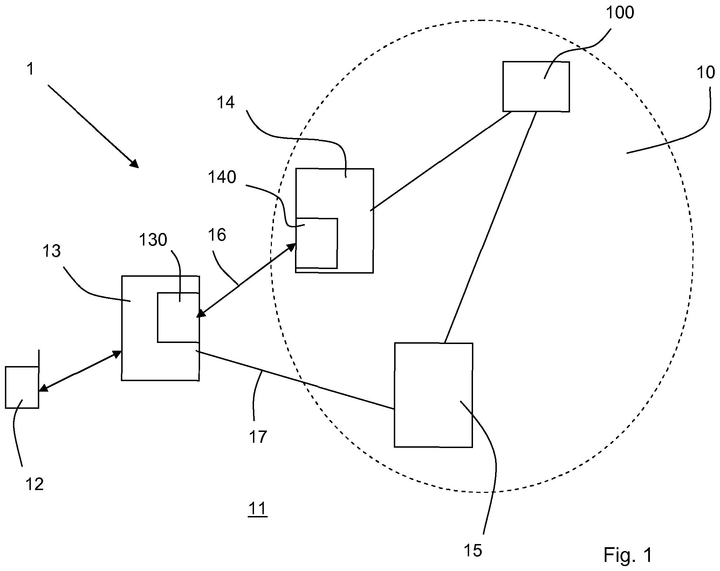

In the system 1 shown in Figure 1 a core network 10, in particular an EPC Core network is shown. The core network 10 comprises a number of components. In figure 1 an SGSN 100 is only shown to indicate the interfaces to the legacy GERAN/UTRAN access technologies. The core network 10 further comprises at least one Packet Data Network Gateway (PDN-GW) (not shown). The access network 11, which may be an E-UTRAN Network comprises at least one user equipment 12, which may be a mobile terminal such as a mobile phone. The user equipment 12 may, however, also be any kind of computer which is capable of transmitting signals via the access network 11. In addition, an access point 13 to the core network 10 is shown. The access point 13 is preferably an eNB and will therefore hereinafter also be referred to as eNB 13. The eNB 13 communicates via an interface 16 to a serving gateway 14 and via an interface 17 to an MME 15. The interface 16 is an S1-U interface and interface 17 is an S1-MME interface.

In the depicted embodiment, the eNB 13 comprises a security gateway 130, which is integrated into the eNB 13. The security gateway 130 may, however, also be collocated with the eNB 13 and may thus be a stand alone entity which is connected to or communicates with the eNB 13. In the depicted embodiment, also the serving gateway 14 comprises a security gateway 140, which is integrated into the serving gateway 14. The security gateway 140 may, however, also be collocated with the serving gateway 14 and may thus be a stand alone entity which is connected to or communicates with the serving gateway 14. The serving gateway 14 communicates with at least one Packet Data Network Gateway (PDN-GW).

In the eNB 13 and in the serving gateway 14 a multiplexing unit (not shown) is provided. The multiplexing unit, which may also be referred to as a multiplexer, may be integrated into the security gateway 130 or 140.

Even though only one user equipment 12, one access point 13, one serving gateway 14 and one MME 15 are depicted in Figure 1, it is obvious that the system preferably comprises several of each of these components.

If for example a call is set up from the user equipment 12, the voice data will be delivered to the eNB 13. With the present invention, at the eNB 13 multiplexing will be performed. In particular, data packets containing voice data will be multiplexed. The data packets containing voice data will hereinafter also be referred to as VoLTE packets or VoLTE PDUs.

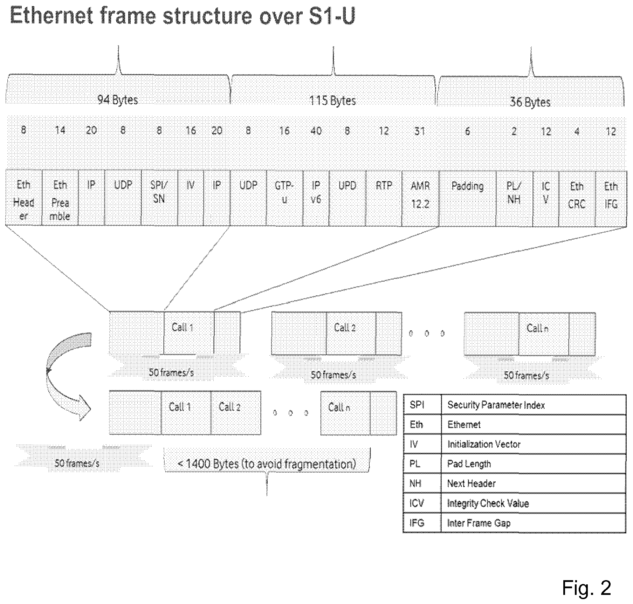

In Figure 2 a schematic view of multiplexing according to the present invention over the S1-U interface 16 is shown. The data packets in this example are referred to as calls. The first data packet is referred to as call 1, the second one as call 2 and so on. As can be derived from the detailed Ethernet frame structure, each data packet comprises an outer and an inner header. The outer header comprises Ethernet frames and encapsulation headers. The inner header comprises at least a UDP header, a GTP-U header, an IP header, another UDP header before the RTP payload. After the payload an AMR Codec is included. This data packet with the inner header has 115 Bytes. In addition, 94 bytes before are used for the outer header, in particular Ethernet frames and other information and 36 bytes after the data packet with the inner header are used for the outer header, in particular Padding as well as information such as Ethernet frames.

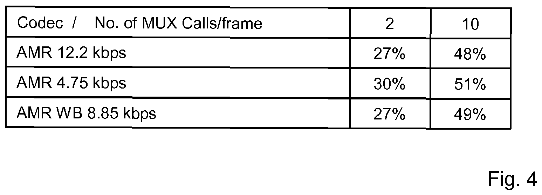

If each of the data packets (call 1 to call n) with headers were to be transmitted from the eNB 13 to a respective serving gateway 14, each packet with headers would have to be transmitted. Given the fact that the transmission rate is limited and may be 50 frames per second, a delay may occur. In the lower part of Figure 2 a multiplexed data packet is shown, where the individual data packets call1 through call n are combined with one single Ethernet header. This header may also be referred to as a MUX header. As can be derived from the depicted example, the size of the overall, that means multiplexed, data packet that has to be transmitted via the S1-U interface is reduced at least by (94 Bytes plus 36 Bytes) times n-1. The achieved bandwidth saving for various VoLTE Codecs and numbers of multiplexed calls is shown in Figure 4. As can be derived from this table about 50% bandwidth can be saved with a codec of AMR 4.75 kbps and 10 multiplexed calls.

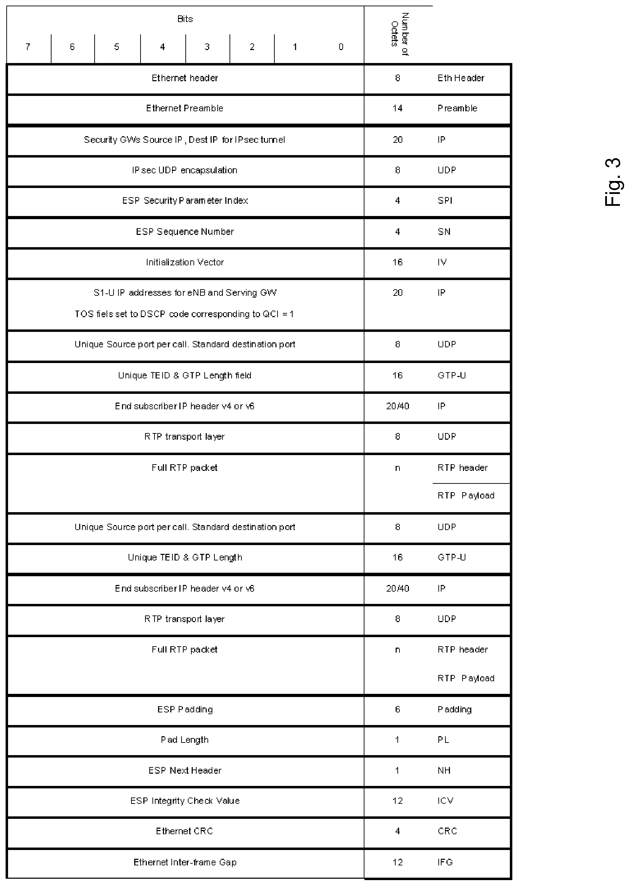

Figure 3 shows an example of S1-U protocol headers with two multiplexed voice calls.

As can be derived from Figure 3, the UDP header carrying the unique source port per call as well as the GTP-U and IP header, namely the end subscriber IP header v4 or V6 are maintained in the data packets before the RTP header and payload. These headers are maintained for each of the multiplexed calls.

As the data packets which are received at the transmitting gateway already comprise the UDP header carrying the unique source port per call as well as the GTP-U and IP header, namely the end subscriber IP header v4 or V6 a considerable amount of information may be obtained there from. In particular, the TEID, the GTP length, the information on whether the payload is voice data or which other data is included in the payload can be derived from the header. The information on the payload may be derived from the IP header of the inner header of the data packet and/or from the IP header of the outer header of the data packet. In particular, the DSCP code or QCI may be used to determine whether the payload includes voice data. This information may be used to decide on which data packets are to be multiplexed together. In particular, it may be provided that only data packets with the type of data in the payload, for example voice data, are to be combined into one multiplexed data packet. In addition, or alternatively, the amount of data packets may be limited to a certain size of the multiplexed data packet. In this respect, the GTP length field may be used as information for deciding whether a data packet may still be included in the multiplexing or not. Finally, it may also or alternatively be decided that only data packets which are designated for the same end recipient, in particular the same TEID may be multiplexed together.

Once the multiplexing has been performed and the multiplexed data packet is transmitted to and received at the other gateway, for example at the serving gateway, de-multiplexing can be performed. The multiplexing unit of the receiving gateway or a separate de-multiplexing unit, which may be provided at the receiving gateway, may perform the de-multiplexing of received multiplexed data packets. The de-multiplexing unit or the multiplexing unit serving for de-multiplexing may also be referred to as a de-multiplexer. As the de-multiplexed data packets will still include the indication of the source port in the UDP, it will be still possible to seamlessly trace any errors.

The de-multiplexer will be able to identify the boundaries between the data packets contained in the multiplexed data packet using the GTP-U length field that is maintained by the multiplexer for each individual data packet.

One preferred aspect of the invention may be summarized as follows. Instead of packaging or encapsulating each data packet, in particular voice packet with the respective headers, several data packets are multiplexed and are provided with only one single header. This multiplexing is carried out in the core network via the S1-U interface. The present invention saves bandwidth, as it is no longer necessary to transmit one header for each data packet. The header is considerably larger in size compared to the data contained in the data packet. Hence, several data packets with several headers use a considerable amount of bandwidth. This is in particular crucial for the transmission via microwave transmission, which in itself only has a small bandwidth.

The present invention has a number of advantages. In particular, this invention enables significant efficiency improvement in transporting voice calls over the Evolved Packet Core (EPC) S1-U interface. The S1-U interface typically involves microwave links of relatively limited bandwidth (often less than 300 Mb/s) and hence is considered an appropriate candidate for such efficiency improvement.

The multiplexing process is even simpler than in the Nb case, as the GTP-U header already contains a unique identifier (the TEID) and a length indicator of each multiplexed packet, and hence there is no need to add extra octets in special MUX headers between the multiplexed packets to carry this information.

### Reference Numbers

- 1: System
- 10: Core network (EPC)
- 100: SGSN
- 11: Access network
- 12: User equipment
- 13: Access Point (eNB)
- 130: Security Gateway
- 14: Serving Gateway
- 140: Security Gateway
- 15: MME
- 16: interface (S1-U)
- 17: interface (1-MME)

## Claims

1. Method for transmitting data packets over an interface (16) between at least one transmitting gateway (13, 130, 14, 140) and at least one receiving gateway (13, 130, 14, 140) of a communications network, wherein the transmission is carried out between a gateway (13, 130) which is comprised by an access point (13) to a core network (10) and comprises radio resource management functionalities, and a gateway (14, 140) which is comprised by a serving gateway (14) of the core network (10) and the core network (10) is a packet oriented mobile data network and the interface (16) is an interface for user plane tunnelling, wherein the method comprises extracting information from at least one header of at least one of the data packets received at the transmitting gateway (13, 130, 14, 140), and using said extracted information for transmission of the at least one data packet, wherein the transmission includes multiplexing of at least two data packets, wherein at least part of the headers of the received data packets are maintained, and wherein the extracted information is used as addressing information of a designated communication tunnel.

2. Method according to claim 1, **characterized in that** the extracted information is used as filter information to select data packets which are to be multiplexed together in one multiplexed packet.

3. Method according to claim 1, **characterized in that** the extracted information is tunnelling information received at the transmitting gateway (13, 130, 14, 140) from the receiving gateway (13, 130, 14, 140).

4. Method according to anyone of claims 2 to 3, **characterized in that** the selection of packets to be multiplexed is performed based on filter information indicative of the data type to be transmitted in the data packet.

5. Method according to anyone of claims 2 to 4, **characterized in that** the selection of packets to be multiplexed is performed based on filter information indicative of the length of the data packet.

6. Method according to anyone of claims 1 to 5, **characterized in that** information on the transmitting gateway is included in a multiplex header.

7. Method according to anyone of claims 1 to 6, **characterized in that** additional information is extracted from the header of at least one of the data packets in a multiplexed packet at the receiving gateway (13, 130, 14, 140) for error detection.

8. Method according to anyone of claims 1 to 7, **characterized in that** at least part of the information is extracted from a GTP-U header of the received data packet.

9. Method according to anyone of claim 3 and claims 4 to 8 as far as they depend on claim 3, **characterized in that** the tunnelling information is a TEID.

10. Method according to anyone of claims 1 to 9, **characterized in that** at least part of the information which is extracted is the DSCP code or the QCl of the received data packet.

11. System for transmitting and receiving data packets over an interface between at least one transmitting gateway (13, 130, 14, 140) and at least one receiving gateway (13, 130, 14, 140) of a communications network (10), wherein the transmission is carried out between a gateway (13, 130, 14, 140) which is comprised by an access point (13) to a core network (10) and comprises radio resource management functionalities, and a gateway (13, 130, 14, 140) which is comprised by a serving gateway (14) of the core network (10) and the core network (10) is a packet oriented mobile data network and the interface is an interface for user plane tunnelling, wherein at least the transmitting gateway (13, 130, 14, 140) comprises a multiplexing unit for multiplexing data packets selected based on information extracted from the header of at least one of the data packets received at the transmitting gateway (13, 130, 14, 140), wherein at least part of the header of the received data packet is maintained in the data packet obtained by multiplexing, and wherein the extracted information is used as addressing information of a designated communication tunnel.

12. System according to claim 11, **characterized in that** the transmitting and receiving gateway (13, 130, 14, 140) is integrated into or collocated with an access point (13) to the core network (10) or the gateway (13, 130, 14, 140) is integrated into or collocated with the serving gateway (14) of the core network (10).

## Patentansprüche

1. Verfahren zum Übertragen von Datenpaketen über eine Schnittstelle (16) zwischen mindestens einem sendenden Gateway (13, 130, 14, 140) und mindestens einem empfangenden Gateway (13, 130, 14, 140) eines Kommunikationsnetzes, wobei die Übertagung ausgeführt wird zwischen einem Gateway (13), das einen Zugangspunkt (13) zu einem Kernnetz (10) aufweist und Funkressourcenverwaltungsfunktionalitäten aufweist, und einem Gateway (14, 140) das ein bedienendes Gateway (14) des Kernnetzes (10) aufweist und das Kernnetz (10) ein paketorientiertes mobiles Datennetz ist und die Schnittstelle (16) eine Schnittstelle für Benutzerebenen-Tunneln ist, wobei das Verfahren das Extrahieren von Informationen aus mindestens einem Header von mindestens einem der Datenpakete aufweist, die am sendenden Gateway (13, 130, 14, 140) empfangen werden, und Verwenden der extrahierten Informationen zum Senden des mindestens einen Datenpakets, wobei das Senden das Multiplexen von mindestens zwei Datenpaketen aufweist, wobei mindestens ein Teil der Header der empfangenen Datenpakete beibehalten wird, und wobei die extrahierte Information als Adressierungsinformationen für einen designierten Kommunikationstunnel verwendet wird.

2. Verfahren nach Anspruch 1, **dadurch gekennzeichnet, dass** die extrahierte Information als Filterinformation verwendet wird, um Datenpakete auszuwählen, die zu einem Multiplexpaket zusammengemultiplext werden sollen.

3. Verfahren nach Anspruch 1, **dadurch gekennzeichnet, dass** die extrahierte Information Tunnelinformation ist, die am sendenden Gateway (13, 130, 14, 140) vom empfangenden Gateway (13, 130, 14, 140) empfangen werden.

4. Verfahren nach einem der Ansprüche 2 bis 3, **dadurch gekennzeichnet, dass** die Auswahl der zu multiplexenden Pakete auf der Grundlage von Filterinformationen durchgeführt wird, die indikativ sind für den im Datenpaket zu übertragenden Datentyp.

5. Verfahren nach einem der Ansprüche 2 bis 4, **dadurch gekennzeichnet, dass** die Auswahl der zu multiplexenden Pakete auf der Grundlage von Filterinformationen durchgeführt wird, die indikativ für die Länge des Datenpakets sind.

6. Verfahren nach einem der Ansprüche 1 bis 5, **dadurch gekennzeichnet, dass** Informationen über das sendende Gateway in einem Multiplex-Header enthalten sind.

7. Verfahren nach einem der Ansprüche 1 bis 6, **dadurch gekennzeichnet, dass** zur Fehlererkennung zusätzliche Informationen aus dem Header mindestens eines der Datenpakete in einem Multiplexpaket am empfangenden Gateway (13, 130, 14, 140) extrahiert werden.

8. Verfahren nach einem der Ansprüche 1 bis 7, **dadurch gekennzeichnet, dass** mindestens ein Teil der Informationen aus dem GTP-U-Header des empfangenen Datenpakets extrahiert wird.

9. Verfahren nach einem der Ansprüche 3 und Ansprüchen 4 bis 8, sofern diese von Patentanspruch 3 abhängig sind, **dadurch gekennzeichnet, dass** die Tunnelinformation eine TEID ist.

10. Verfahren nach einem der Ansprüche 1 bis 9, **dadurch gekennzeichnet, dass** zumindest ein Teil der Informationen, die extrahiert werden, der DSCP-Code oder der QCI des empfangenen Datenpakets ist.

11. System zum Senden und Empfangen von Datenpaketen über eine Schnittstelle zwischen mindestens einem sendenden Gateway (13, 130, 14, 140) und mindestens einem empfangenden Gateway (13, 130, 14, 140) eines Kommunikationsnetzes (10), wobei die Übertagung ausgeführt wird zwischen einem Gateway (13), das einen Zugangspunkt (13) zu einem Kernnetz (10) aufweist und Funkressourcenverwaltungsfunktionalitäten aufweist, und einem Gateway (14, 140) das ein bedienendes Gateway (14) des Kernnetzes (10) aufweist und das Kernnetz (10) ein paketorientiertes mobiles Datennetz ist und die Schnittstelle (16) eine Schnittstelle für Benutzerebenen-Tunneln ist, wobei zumindest das sendende Gateway (13, 130, 14, 140) aufweist eine Multiplexeinheit zum Multiplexen von Datenpaketen, die basierend auf Informationen ausgewählt wurden, die aus dem Header von mindestens einem der Datenpakete extrahiert wurden, die an dem sendenden Gateway (13, 130, 14, 140) empfangen wurden, wobei mindestens ein Teil des Headers der empfangenen Datenpakete in dem durch Multiplexen erhaltenen Datenpacket beibehalten wird, und wobei die extrahierte Information als Adressierungsinformationen für einen designierten Kommunikationstunnel verwendet wird.

12. System nach Anspruch 11, **dadurch gekennzeichnet, dass** das sendende und das empfangende Gateway (13, 130, 14, 140) in einen Zugangspunkt (13) zum Kernnetz (10) integriert oder mit diesem zusammengestellt ist, oder das Gateway (13, 130, 14, 140) in das bedienende Gateway (14) des Kernnetzwerks (10) integriert oder mit diesem zusammengestellt ist.

## Revendications

1. Procédé pour transmettre des paquets de données sur une interface (16) entre au moins une passerelle de transmission (13, 130, 14, 140) et au moins une passerelle de réception (13, 130, 14, 140) d'un réseau de communications, dans lequel la transmission est réalisée entre une passerelle (13, 130) qui est constituée par un point d'accès (13) à un réseau coeur (10) et comprend des fonctionnalités de gestion de ressources radio, et une passerelle (14, 140) qui est constituée par une passerelle de desserte (14) du réseau coeur (10) et le réseau coeur (10) est un réseau de données mobile orienté paquets et l'interface (16) est une interface pour la tunnellisation de plan utilisateur, dans lequel
le procédé comprend l'extraction d'informations d'au moins un en-tête d'au moins un des paquets de données reçus au niveau de la passerelle de transmission (13, 130, 14, 140), et l'utilisation desdites informations extraites pour la transmission de l'au moins un paquet de données, dans lequel la transmission inclut le multiplexage d'au moins deux paquets de données, dans lequel au moins une partie des en-têtes des paquets de données reçus sont maintenus, et dans lequel les informations extraites sont utilisées en tant qu'informations d'adressage d'un tunnel de communication désigné.

2. Procédé selon la revendication 1, **caractérisé en ce que** les informations extraites sont utilisées en tant qu'informations de filtre pour sélectionner des paquets de données qui doivent être multiplexés ensemble dans un paquet multiplexé.

3. Procédé selon la revendication 1, **caractérisé en ce que** les informations extraites sont des informations de tunnellisation reçues au niveau de la passerelle de transmission (13, 130, 14, 140) en provenance de la passerelle de réception (13, 130, 14, 140) .

4. Procédé selon l'une quelconque des revendications 2 et 3, **caractérisé en ce que** la sélection de paquets à multiplexer est effectuée sur la base d'informations de filtre indiquant le type de données à transmettre dans le paquet de données.

5. Procédé selon l'une quelconque des revendications 2 à 4, **caractérisé en ce que** la sélection de paquets à multiplexer est effectuée sur la base d'informations de filtre indiquant la longueur du paquet de données.

6. Procédé selon l'une quelconque des revendications 1 à 5, **caractérisé en ce que** des informations sur la passerelle de transmission sont incluses dans un en-tête multiplex.

7. Procédé selon l'une quelconque des revendications 1 à 6, **caractérisé en ce que** des informations additionnelles sont extraites de l'en-tête d'au moins un des paquets de données dans un paquet multiplexé au niveau de la passerelle de réception (13, 130, 14, 140) pour la détection d'erreur.

8. Procédé selon l'une quelconque des revendications 1 à 7, **caractérisé en ce qu'**au moins une partie des informations est extraite d'un en-tête GTP-U du paquet de données reçu.

9. Procédé selon l'une quelconque de la revendication 3 et des revendications 4 à 8 dans la mesure où elles dépendent de la revendication 3, **caractérisé en ce que** les informations de tunnellisation sont un TEID.

10. Procédé selon l'une quelconque des revendications 1 à 9, **caractérisé en ce qu'**au moins une partie des informations qui sont extraites est le code DSCP ou le QCI du paquet de données reçu.

11. Système pour transmettre et recevoir des paquets de données sur une interface entre au moins une passerelle de transmission (13, 130, 14, 140) et au moins une passerelle de réception (13, 130, 14, 140) d'un réseau de communications (10), dans lequel la transmission est réalisée entre une passerelle (13, 130, 14, 140) qui est constituée par un point d'accès (13) à un réseau coeur (10) et comprend des fonctionnalités de gestion de ressources radio, et une passerelle (13, 130, 14, 140) qui est constituée par une passerelle de desserte (14) du réseau coeur (10) et le réseau coeur (10) est un réseau de données mobile orienté paquets et l'interface est une interface pour la tunnellisation de plan utilisateur, dans lequel
au moins la passerelle de transmission (13, 130, 14, 140) comprend une unité de multiplexage pour multiplexer des paquets de données sélectionnés sur la base d'informations extraites de l'en-tête d'au moins un des paquets de données reçus au niveau de la passerelle de transmission (13, 130, 14, 140), dans lequel au moins une partie de l'en-tête du paquet de données reçu est maintenue dans le paquet de données obtenu par multiplexage, et dans lequel les informations extraites sont utilisées en tant qu'informations d'adressage d'un tunnel de communication désigné.

12. Système selon la revendication 11, **caractérisé en ce que** la passerelle de transmission et de réception (13, 130, 14, 140) est intégrée à ou colocalisée avec un point d'accès (13) au réseau coeur (10) ou la passerelle (13, 130, 14, 140) est intégrée à ou colocalisée avec la passerelle de desserte (14) du réseau coeur (10).
